# EUROPEAN PATENT SPECIFICATION

(11) **EP 2 571 904 B1**
(45) Date of publication and mention of the grant of the patent: **24.02.2016**
(21) Application number: 11724364.2
(22) Date of filing: 11.05.2011
(51) Int. Cl.: C08F 8/44, C08F 8/02, C08F 220/12, C08F 220/22, C08F 226/06, H01G 9/20

(54) **NEW GEL ELECTROLYTES SUITABLE FOR PHOTOELECTROCHEMICAL DEVICES**
NEUE GELELEKTROLYTE FÜR FOTOELEKTROCHEMISCHE ELEMENTE
NOUVEAUX ÉLECTROLYTES EN FORME DE GEL CONVENANT AUX DISPOSITIFS PHOTOÉLECTROCHIMIQUES

(30) Priority: 17.05.2010 WO PCT/IT2010/000216
(43) Date of publication of application: 27.03.2013
(73) Proprietor: Daunia Solar Cell S.r.l., 71100 Foggia (IT)
(72) Inventor: MARTINA, Francesca, I-73010 Galugnano (LE) (IT); DE GREGORIO, Gian Luca, I-10040 La Loggia (Torino) (IT)
(74) Representative: Gerli, Paolo
(86) International application number: PCT/EP2011/002338
(87) International publication number: WO 2011/144306

(56) References cited:
- JP-A- 2002 042 909
- US-A1- 2007 106 040
- SAMBHY V ET AL: "Antibacterial and hemolytic activities of pyridinium polymers as a function of the spatial relationship between the positive charge and the pendant alkyl tail (+ supporting information)", ANGEWANDTE CHEMIE - INTERNATIONAL EDITION, vol. 120, no. 7, 7 January 2008 (2008-01-07), pages 1270-1274, XP002609726, WILEY-VCH VERLAG DE DOI: 10.1002/ange.200702287 -& SAMBHY V ET AL: "Supporting information: Antibacterial and hemolytic activities of pyridinium polymers as a function of the spatial relationship between the positive charge and the pendant alkyl tail", ANGEWANDTE CHEMIE - INTERNATIONAL EDITION, vol. 120, 2008, pages S1-S29, XP002611981,

## Description

### FIELD OF THE INVENTION

This invention relates to electrolytes comprising linear organic copolymers containing alkyl pyridinium and/or alkyl imidazolium units and methacrylic units, as gelling agents. The electrolytes so obtained take the form of gels suitable for use in photoelectrochemical devices, such as photoelectrochemical cells, in particular *Dye Sensitized Solar Cells.*

### PRIOR ART

Liquid electrolytes have been used in photoelectrochemical devices, as for example reported in Nature, 353, 737-740 (1991) and in US 4927721, but there have been problems with the reliability of their functioning because of the evaporation which takes place in long-term use, with a consequent drop in conversion efficiency. Various approaches have been developed to prevent or reduce the deterioration in the photoelectric properties of the device. These include the use of solid electrolytes, comprising for example cross-linked polyethylene oxide. Nevertheless solid polymer electrolytes have many problems such as short service life and insufficient current density, and the photoelectrochemical cells using them show low conversion levels. In order to overcome these problems the use of polymer gel electrolytes has been considered because of some advantageous properties, such as ease of preparation of the polymers, low cost of the starting products, thermal stability, low vapour pressure, good filling and contact properties between the nanostructure electrolyte and the counter electrode, and good ion conductibility. Polymer gel electrolytes are obtained by trapping the liquid electrolyte (based on plasticizing organic solvents with high boiling point and organic and inorganic salts) within the polymer matrix. In a polymer gel electrolyte, inorganic salts with a low reticular energy interact with the polymer matrix through coordination between the metal ion and polar groups (ethers, esters, amides). For example polymer gel electrolytes containing units with carbonate groups, nitrogen-containing heterocyclic groups or quaternary ammonium salts are described in EP-A-911841. EP-A-1507307 and Nat. Mater. 2, 402-407, 2003 describe the preparation of a quasi-solid electrolyte (gel electrolyte) by adding poly(vinylidenefluoride-co-hexafluoropropylene) to a liquid electrolyte based on 3-methoxypropionitrile; the system provides high stability if combined with a special amphiphilic dye based on ruthenium. Electrochimica Acta 52, 5334-5338, 2007 describes the use of a polymer gel based on polyvinylpyrrolidone/polyethylene glycol, the polyvinylpyrrolidone being a polymer containing a nitrogen-heterocycle capable of coordinating with iodine and the polyethylene glycol being a photochemically-stable straight chain polymer capable of holding the organic solvents of the electrolyte solution within the polymer chains; the gel formation, brought about using the polymer blending technique, requires a precise combination of specific polymers and electrolytes, thus restricting the versatility of the process.

JP2002042909 discloses dye-sensitized photoelectrochemical cells having dye-adsorbed semiconductor fine particles containing cation polymers, providing higher photo-electric conversion efficiency. The cation polymer has tetraalkylammonium, imidazolium, or pyridinium groups.

A greater freedom in choice of the starting polymer occurs in the case of gels produced by cross-linking, wherein the cross-linking brings about a stiffening of the polymer matrix, with consequent gelling of the solution. For example EP-A-986080 describes gel electrolytes obtainable by reacting a nitrogen-containing polymer with a bi- or multi-dentate electrophilic reagent; the latter binds to an equivalent number of nitrogen atoms in the polymer, bringing about the cross-linking. However the cross-linking/gelling directly induced by heating within the photochemical device makes the control of the process problematical. In J. Photochem. and Photobiol. A., 148, 33-39, 2002, electrolyte solutions based on polyvinylpyridine are gelled via a reaction with suitable polyalkylating halides (cross-linkers) forming bridges between the nitrogen atoms in the polymer; here again the cross-linking brought about by heating *in situ* within the device makes it difficult to control the uniformity of the medium during the cross-linking/gelling process. Uniformity of the gel is however fundamental to cell performance since changes in gel viscosity result in a modified mobility of the electrical charges; this alters the level of response of the device, reducing reproducibility. Electrochimica Acta, 52, 4858-4863, 2007 reports the preparation of a gel electrolyte polymer via an *in situ* cross-linking/gelling process involving the copolymer poly(vinylpyridine-co-acrylonitrile) and a bi-dentate cross-linking agent (hexyl diiodide). Nevertheless the problem of controlling the uniformity of the medium, with consequent discontinuity in the conversion values of the photoelectrochemical cells, still remains a problem even with these electrolyte gels.

In the light of the prior art mentioned above the need remains largely unsatisfied for gel electrolytes obtainable from a wide range of polymers, using an easily-controllable process, especially during the gelling stage; these gels should also be highly homogeneous, and capable of providing a reproducible high-intensity response, both when new and after prolonged use.

### SUMMARY

It has now been unexpectedly found that it is possible to produce electrolyte gels with the abovementioned favourable properties without resorting to the cross-linking reactions used in the state of the art.

This has been made possible through a class of linear quaternised copolymers which, used at specific concentrations, provide highly-efficient gel electrolytes which are stable over time. The copolymers in question are characterised in that they contain alkyl methacrylate monomer units combined with alkyl pyridine and/or alkyl imidazole monomer units, within specific molecular weights; the said units may be present in appropriate ratios; quaternisation, brought about by a non-cross-linking alkylating agent, allows to obtain gels with excellent efficiency values, which are thus highly useful for application in photoelectrochemical devices.

One object of this invention is therefore a method for producing polymer gel electrolytes based on linear copolymers containing alkyl pyridinium and/or alkyl imidazolium units and alkyl methacrylates. A further object of this invention is a method for producing photoelectrochemical devices with excellent efficiency and stability characteristics over time, characterised by using of the aforesaid gel electrolytes. The invention also extends to the gel electrolytes as such, comprising one or more quaternised copolymers as indicated above, their use as charge transfer media, in particular in photoelectrochemical devices, the devices containing them, for example photovoltaic cells. The invention further extends to part of the above copolymers per se, as new chemical compounds.

### DETAILED DESCRIPTION OF THE INVENTION

The quaternised copolymers containing alkyl pyridinium units and/or alkyl imidazolium units and methacrylic ester units, on which the present invention is based, are described by the following formula (I) 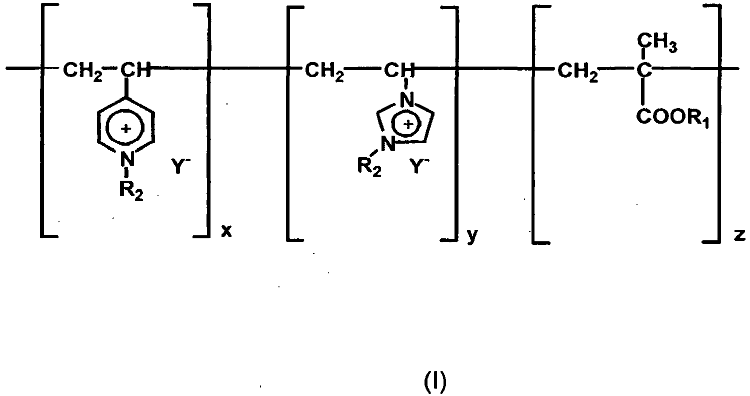
where **R₁** represents a straight or branched C₁-C₈ alkyl, optionally substituted by one or more fluorine atoms. Preferably R₁ is a straight or branched C₁-C₄ alkyl, a -CH₂CF₃ group, a -CH₂CF₂CF₃ group or a-CH₂CH₂CF₃ group. R₁ being methyl, butyl or trifluoroethyl is particularly preferred;
**R₂** is straight or branched C₁-C₈ alkyl optionally substituted by one or more fluorine atoms. Preferably R₂ is straight or branched C₁-C₄ alkyl optionally substituted by one or more fluorine atoms; more preferably R₂ is methyl, n-propyl, or trifluoropropyl;
**Y⁻** is an inorganic or organic anion, preferably Cl⁻, Br⁻, I⁻, CF₃COO⁻, CF₃SO₃⁻ or (CF₃SO₂)₂N⁻, more preferably Y⁻ is I⁻, CF₃COO⁻ or (CF₃SO₂)₂N-;
**x, y, z** each represent the molar ratios of the corresponding monomer units present in the copolymer, where (x+y) lies between > 0% and ≤ 90% with respect to the sum of (x+y+z), and where none of x,y,z is = 0%; the upper limit of the range (≤ 90%) means that the copolymer in question always has methacrylic ester units, which can be copolymerised with alkyl pyridinium units, alkyl imidazolium units or both.

In the formula (I), the indices x,y,z do not represent the absolute number of units present in the copolymer, but their corresponding molar ratios. For example formula (I) in which x=1, y=2, z=9, identifies a copolymer in which overall 2 alkyl imidazolium units and 1 alkyl pyridinium unit are present for each 9 units of alkyl methacrylate; in this case the sum (x+y) = 3, represents 25% of (x+y+z) = 12; the value (x+y) = 25%, being comprised between > 0% and ≤ 90%, falls within the range defined above.

The formula (I) is not limited to copolymers having constant repetitive monomer units, e.g. (A-B-C)-(A-B-C)-(A-B-C)..., nor is it restricted to a specific sequence of monomers, but includes any sequences of monomers, e.g. A-A-C-A-B-C-C-A-B..., provided that x, y, z satisfy the abovementioned molar proportions.

The molecular weight (i.e. number average molecular weight, Mₙ) of the copolymers of formula (I) is comprised in the range between 15000 and 40000 Da, preferably between 15000-20000, 20000-25000, 25000-30000, or 30000-35000 Da, and combinations of the extremes of these ranges; preferably, the copolymers may be additionally characterized by their M_{w} value (weight average molecular weight), which lies preferably between 105% and 130% of the chosen M_{w}.

Subject to the above molecular weights, the following features may be additionally present:
- the total number of monomer units (= methacrylic ester + alkyl pyridinium + alkyl imidazolium) present in copolymer (I) generally lies between 70 and 400, preferably between 100 and 350, and more preferably between 150 and 300;
- the number of methacrylic ester units present in copolymer (I) generally lies between 50 and 350, preferably between 80 and 300, more preferably between 100 and 250;
- the number of alkyl pyridinium units present in copolymer (I) is generally between 0 and 80, preferably between 0 and 60, and more preferably between 0 and 50;
- the number of alkyl imidazolium units present in the copolymer (I) is generally between 0 and 80, preferably between 0 and 70, more preferably between 0 and 60.

The gel electrolytes of the invention are characterized by comprising the co-polymer of formula (I) (with molecular weight (Mₙ) between 15000 and 40000 Da, where R₁, R₂, Y⁻, x, y, z are as defined above, and (x+y) lies between > 0% and ≤ 90% with respect to the sum of (x+y+z)), in a suitable solvent, said copolymers being present at a concentration between 15% and 40% by weight, preferably between 25% and 40%, more preferably between 30% and 40%, optionally in presence of standard electrolytes; exemplified solvents and electrolytes are described further in this application.

The process for preparing the copolymers of formula (I) comprises the step of reacting copolymers of formula (II): 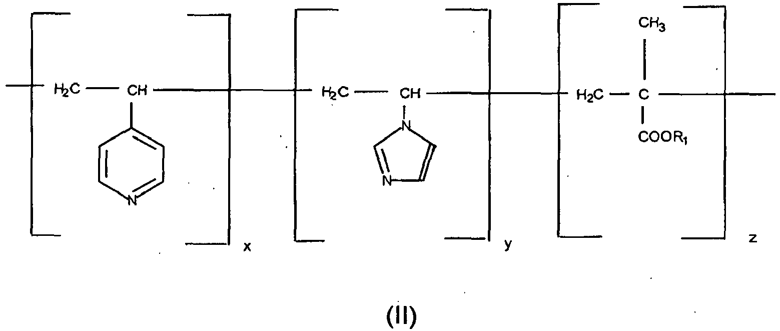 where R₁, x, y, z have the meanings already described for formula (I) with one or more monoalkylating halides of formula R₂-Hal, in a suitable solvent, where R₂ has the meaning indicated for formula (I) and Hal indicates a leaving group selected from chlorine, bromine and iodine atoms, preferably iodine. Preferred monoalkylating halides are CH₃I, C₃H₇I, CF₃CH₂CH₂I. The term "monoalkylating" means that "Hal" is bound to a single carbon atom in R₂; this carbon atom is therefore the only reactive site which is capable of alkylating the copolymer (II): the use of the compound R₂-Hal thus allows quaternising the copolymer (II) without cross-linking it.

The monoalkylating halides are added in equivalent quantity with respect to the quaternisable nitrogen-containing groups (cf. N-R₂ in formula(I)), thereby achieving complete (or substantially complete) quaternisation of formula (I). The substituent R₂ is further selected with a molecular weight such that, after complete quaternisation of the reagent (II), obtains the copolymer (I) with molecular weight (i.e. Mₙ) between 15000 and 40000 Da.

The quaternisation of compound (II) is performed at a temperature preferably comprised between 40 and 100°C over a period of between 15 and 25 hours, more preferably between 60 and 80°C over a period of between 18 and 22 hours.

The copolymer (I) thus obtained, at a concentration between 15% and 40% by weight, preferably between 25% and 40%, more preferably between 30% and 40% in a solvent, optionally supplemented with standard electrolytes, forms gel electrolytes suitable for use in photoelectrochemical devices.

The gel electrolytes can thus be obtained by mixing said copolymer of formula (I) with a solvent, in the above given concentration ranges. This is typically a multi-step preparation, wherein the polymers are first synthesized, isolated, and then mixed with a suitable solvent to form the gels.

In an alternative advantageous embodiment, it is possible to operate in a single step by selecting, for the quaternisation reaction, a suitable solvent medium and a suitable concentration of the compound of formula (II) to obtain said copolymer of formula (I) already in gel form in an electrolyte medium which is directly incorporable into a photoelectrochemical device. In this embodiment the quaternised product needs not be isolated: the reaction medium resulting from quaternisation, optionally supplemented with standard electrolytes, is already an electrolyte gel and can be incorporated as such in electronic devices. Thus, according to this embodiment, the copolymers of formula (II) are:
(a): dissolved in a suitable solvent or mixture of solvents, at a suitable concentration;
(b): added with the aforesaid monoalkylating halides and, optionally, standard electrolytes.

Steps (a) and (b) are not necessarily sequential in the process, but merely indicate the components which are necessary for preparing the gels; these may therefore be added separately and in any order: for example the monoalkylating halides can first be dissolved in the solvent, and then some of the standard electrolytes can be added, followed by the copolymers of formula (II), and then the remaining standard components, and so on.

The solvents used in step (a) have a high dielectric constant, and relatively high boiling point. Preferred values for dielectric constant is ε ≥ 35; preferred values for boiling point are those higher than 150°C. Examples of these solvent are, without any limitation:
- carbonic acid esters such as ethylene carbonate, propylene carbonate, vinylene carbonate, butylene carbonate, dimethyl carbonate, diethyl carbonate, methylethyl carbonate, dipropyl carbonate;
- lactones such as γ-butyrolactone, γ-valerolactone, γ-capryl lactone, crotolactone, γ-caprolactone and δ-valerolactone;
- cyclic ethers such as tetrahydrofuran, methyl-tetrahydrofuran, 1,3-dioxolane and 1,4-dioxolane;
- nitriles such as acetonitrile, propionitrile, 3-methoxypropionitrile, glutaronitrile,
- heterocyclic compounds such as N-methyl pyrrolidone, 4-methyl-1,3-dioxan, 3-methyl-2-oxazolidinone.

The said solvents may be used either individually or as mixtures. Preferred solvents are the nitriles and the heterocyclic compounds. Particularly preferred are 3-methoxypropionitrile and N-methyl oxazolidinone, alone or as mixtures. A particularly preferred mixture is that formed by 3-methoxypropionitrile and N-methyl oxazolidinone)in a 1 / 1 weight ratio.

The compound (II) is used at a concentration in said solvent suitable to obtain, after complete quaternisation with R₂-Hal, the copolymer (I) at a concentration of between 15% and 40% by weight, preferably between 25% and 40%, more preferably between 30% and 40%.

The standard electrolytes mentioned in paragraph (b) may be selected from those commonly used in the field: among these, mention may be made of alkaline or alkaline earth metal iodides such as for example LiI, NaI, KI, CsI, CaI₂, iodides of quaternary ammonium compounds and N-heterocyclic cations such as, for example, 1,2-dimethyl-3-propyl-imidazolium iodide. The abovementioned iodides may be added individually or as a mixture; preferably they are used at a concentration of between 0.05 M and 1 M, more preferably between 0.1 M and 0.7 M. In an advantageous variant the standard electrolytes further include elemental iodine, which forms a redox pair with the iodides in solution, improving electron transport; when used, the iodine is present at a concentration of preferably between 0.01 M and 0.3 M, more preferably between 0.05 M and 0.2 M. The iodide and iodine concentrations described above are meant to refer to the solvent used in step (a); in the case of mixtures, they are meant to relate to the overall number of moles of the components in the mixture.

The copolymers of formula (II) can be prepared from the corresponding alkenyl monomers by free-radical polymerisation in bulk or in the presence of suitable solvents such as, for example, those reported in European Polymer Journal, 37 (2001) 2443-2451, J. Polym. Sci. 43 (1960), 1899 and in J. Appl. Polym. Symp. 8 (1969) 227.

Azoisobutyronitrile, peroxides such as for example lauroyl peroxide, benzoyl peroxide, methylethyl ketone peroxide, hydroperoxides such as for example t-butyl hydroperoxide or pinane hydroperoxide are used as free radical polymerisation catalysts (initiators); azoisobutyronitrile is preferred.

The solvents used for the polymerisation reaction are chlorinated solvents such as for example chloroform and carbon tetrachloride; aromatic solvents such as for example benzene, toluene, xylene and their isomers, mesitylene and its isomers; toluene is particularly preferred.

The polymerisation reaction is performed at a temperature of between 50° and 100°C, preferably between 60° and 70°C.

The quantity of initiator is generally between 0.1% and 3% molar, preferably between 0.4% and 1% molar, more preferably between 0.4% and 0.6% molar, said percentages relating to the total number of moles of alkenyl monomers present. The copolymers of formula (II) so obtained are preferably separated from the reaction solution using an alcohol solvent such as methanol, ethanol, propanol or butanol, which may be straight or branched. Methanol is particularly preferred.

This invention provides a gel based on non-cross-linked linear copolymers of formula (I) as above defined, with useful properties from the point of view of photoelectrochemical applications. In particular, quaternisation of the present copolymers, in the above defined concentrations, provides gels with a viscosity adapted for photoelectrochemical applications, without this resulting in low efficiency products, as is often the case when electrolyte solutions are gelled. Remarkably, the products of the invention are gels per-se, i.e. they do not require the addition of cross-linking agents, thickening agents, or any other gelling agents, etc., for the purpose to obtain a gel; thus they can work effectively when free of any such agents. As documented experimentally, the gels have useful high photovoltaic conversion efficiency (η), open-circuit voltage (Voc), short-circuit current (Jsc) and fill factor (ff) values. Without wishing to be bound by theory, it is thought that charge transfer is kept high because of the linear structure of the copolymer (I) and the absence of cross-linking; it is also thought that these molecular properties contribute to the uniformity of the gel and the stability of response over the long term documented in the experimental part.

Taking advantage of the abovementioned excellent characteristics of the gel, the Applicant has produced high efficiency photoelectrochemical devices. This invention therefore includes a said device comprising a gel based on the copolymer of formula (I) having the abovementioned properties as a charge transfer medium. Typically the device is a photovoltaic cell, preferably a Dye Sensitized Solar Cell (DSSC). These devices can be constructed by using known procedures and, associated with the gel according to the invention, contain known constituent members: as a non-limiting example, the DSSC may comprise an electrically-conducting layer, a semiconducting layer adhesively bonded to the electrically-conducting layer for the transport of electrons, a suitable organic or organometallic dye capable of absorbing light radiation, a layer comprising the gel electrolyte for the transport of holes and a counterelectrode coated by a suitable catalyst metal. The gel based on the compounds of formula (I), containing suitable electrolytes, can be inserted into the cell using per se known techniques: e.g. it is possible to bring about the insertion into a preformed cell by passing the material through a suitable hole; alternatively the cell may be only partly formed, filled with the electrolyte material, and then finished off and sealed. In a particularly advantageous embodiment, prior to insertion in the device, the gel of the invention is sufficiently fluid by heating, and the resulting product is easily injected through the cell hole; subsequently, upon reaching a lower temperature inside the cell, the gel takes up its normal viscosity. This swift method is not applicable to the cross-linked gels of the prior art, which cannot be fluidified by heating: in that case the gel viscosity makes injection troublesome or even impossible, thus the manufacturer must inject the cell with a liquid gel precursor, which is subsequently cross-linked in situ in the cell; the cross-linking reaction is obviously complicate to perform and difficult to control in these conditions. This troublesome procedure is now successfully overcome by the present invention.

The invention will now be described in a non-restrictive way using the following Examples.

### INSTRUMENT MEASUREMENT TECHNIQUES

### NMR

The ¹H NMR spectra were obtained using a Bruker Avance 400 NMR spectrometer at ambient temperature (the chemical shifts, δ_{H}, being reported with respect to tetramethylsilane).

### Viscosity meter

The viscosity of the gel electrolytes whose preparation is described in Examples 2, 4, 6, 8, 10, 12, 13 and 15 was determined using a Brookfield DV-II+Pro viscosity meter provided with a Small Sample Adapter (16 ml), SC4-27 Spindle of cylindrical geometry. Measurements were made at 25°C; in the case of the samples whose preparation is described in Examples 8, 12 and 15 viscosity was determined at 60°C, 40°C and 60°C respectively. Viscosity values were determined at a *shear rate* of 68 sec⁻¹ for the samples in Examples 8, 12, 13 and at a *shear rate* of 10 sec⁻¹ for the samples in Examples 2, 4, 6, 10, 15.

### Gel Permeation Chromatography (GPC)

The values of Mₙ and M_{w} for the copolymers whose synthesis is reported in Examples 1, 3, 5, 7, 9, 11 and 14 were calculated using a gel permeation chromatography apparatus (also known as SEC, molecular exclusion chromatography). This apparatus comprises a GPC MXL column (internal diameter 5 mm, length 300 mm), a polystyrene-based EasyCal Vial calibration solution, and a refractive index detector. Measurements were performed under the following operating conditions: mobile phase tetrahydrofuran (THF), column temperature 20°C, flow 1 ml/min.

### Element analyser

Carbon, hydrogen and nitrogen contents were determined using the EA3000 Series (Eurovector) automatic element analyser.

### EIS (Electrochemical Impedance Spectroscopy)

The impedance measurements on the electrolyte gels were made using an AUTOLAB potentiostat-galvanostat fitted with a small sample conductivity sensor with platinum electrodes in a frequency range between 1 MHz and 0.1 Hz, V BIAS 0 V, DVac 0.01 V) in the presence of illumination equivalent to 100 mW/cm² (detected temperature 30°C). Impedance measurements allowed to determine the following parameters which are characteristic of individual electrolyte gels: *Rs* (resistance in series), *Rct* (resistance due to transfer of charge to the platinum electrode), σ (ion conductivity).

### Solar Simulator

The determination of photovoltaic parameters required the use of a 1.5 AM Newport (Oriel® Product Line) solar simulator. The power of the lamp was calibrated so as to have an incident radiation power per unit surface area of 100 mWcm⁻².

The I-V (current-potential) graphs were obtained by scanning the applied potential and measuring the generated photo current using a "Keithley 2400 SourceMeter".

The photovoltaic parameters (efficiency (η), fill factor (*FF*), open circuit voltage (*Voc*), short-circuit current (Jsc)) recorded over an active area of 0.27 cm² for the devices containing the gel electrolytes obtained as described in Examples 8 and 13, as described in Examples 16 and 17 and for a device containing a liquid electrolyte as described in Example 18 are reported.

### Example 1

### Synthesis of 4-vinyl pyridine-methyl methacrylate copolymer (Copolymer according to formula (II) with x=1, y=0 and z=5)

6.70 ml (6.25 g, 62.43 mmol) of methyl methacrylate and 0.84 ml (0.82 g, 7.8 mmol) of 4-vinyl pyridine were placed in a 50 ml flask. Then 64 mg (0.39 mmol) of AIBN (azobisisobutyronitrile) dissolved in 17 ml of (previously de-aerated) toluene were added to the mixture of monomers de-aerated using a flow of dry nitrogen. The solution was heated under stirring to 65°C-70°C for 48 hours. After returning the reaction mixture to ambient temperature, the copolymer was precipitated out by pouring the toluene solution slowly into 150-200 ml of methanol which was kept stirred. The suspension containing the precipitate was filtered and the precipitate was further washed with methanol and dried under vacuum at 40°C/21 mbar, yielding 5.6 g of copolymer characterised as follows.

Element analysis:
Experimental C = 63.29%
   H = 7.54%
   N = 2.28%
Calculated for x=1, y=0 and z=5
   C = 63.47%
   H = 7.77%
   N = 2.31%

¹H NMR δ_{H} (400 MHz, CDCl₃) 8.55 (**Ar, V**), 6.97 (**Ar, V**), 3.59 **((CH₃O)-ₘₘₘ),** 2.98 **((CH₃O)-_{MMV}),** 1.94 (-(**CH**)-v) 1.81 **(-(CH₂)-_{M}),** 1.40 **(-(CH₂)-_{V}),** 1.25 (-**(CH₂)-_{M}),** 1.00 **((CH₃)-_{M}),** 0.82 **((CH₃)-_{M}).**
GPC: Mn = 20.800 Da; M_{w} = 26.300 Da

### Example 2

### Quaternisation of the copolymers in Example 1 and gelification (R₂ = CH₃ Y⁻ = I⁻)

1.8 g of the copolymer obtained according to Example 1 were dissolved in 5 g of the solvent mixture based on 3-methoxypropionitrile/*N*-methyl oxazolidinone = 1/1 (w/w). 0.77 g (2.89 mmol) of 1,2-dimethyl-3-propyl imidazolium iodide, 122 mg (0.48 mmol) of I₂ and 0.41 g (2.9 mmol) of CH₃I were added to the resulting mixture aerated with flow of dry nitrogen.

The resulting mixture was kept stirred at 70°C for 20 hours in a nitrogen atmosphere; quaternisation/gelification was confirmed by FT-IR:
N-CH₃ (quaternised pyridine nitrogen) 1642 cm⁻¹.
Viscosity: 630 cP at 25°C (shear rate, sec⁻¹, 10)
EIS: *Rs* = 360 Ω; *Rct* = 1840 Ω; δ = 4.3 mS/cm.

### Example 3

### Synthesis of 4-vinyl pyridine-2,2,2-trifluoroethyl methacrylate copolymer

### (Copolymer according to formula (II) with x=1, y=0 and z=7)

Using the same procedure as described in Example 1, 2.93 ml (3.46 g, 20.58 mmol) of 2,2,2-trifluoroethyl methacrylate and 0.27 ml (0.27 g, 2.57 mmol) of 4-vinyl pyridine in 7.2 ml of toluene were caused to react in the presence of 21 mg (0.13 mmol) of azoisobutyronitrile.

The solution was heated under stirring to 65°C-70°C for 48 hours in a nitrogen atmosphere. After returning the reaction mixture to ambient temperature, the organic solution was evaporated off under vacuum at 40°C/21 mbar, yielding 3.54 g of copolymer.

Element analysis:
Experimental C = 45.73%
   H = 4.31%
   N = 1.08%
Calculated for x= 1, y=0 and z=7
   C = 45.90%
   H = 4.37%
   N = 1.09%

¹H NMR δ_{H} (400 MHz, CDCl₃) 8.48 (**Ar, V**), 6.98 **(Ar, V**), 4.33 **((CH₂O)-_{TTT}),** 2.03 (-(**CH**)**-v**), 1.91 **(-(CH₂)-_{T}),** 1.53 **(-(CH₂)-_{V}),** 1.25 **(-(CH₂)-_{T}),** 1.03 **((CH₃)-_{T}),** 0.89 **((CH₃)-_{T}).**
GPC: Mn = 29.100 Da; M_{w} = 33.400 Da

### Example 4

### Quaternisation of the copolymers in Example 3 and gelification. (R₂ = CH₃ Y⁻ = I⁻)

Using the same procedure as described in Example 2, 0.4 g of the copolymer obtained according to Example 3 were dissolved in 1.25 g of a mixture comprising 3-methoxypropionitrile/ *N*-methyloxazolidinone = 1 / 1 (w/w). 44 mg (0.31 mmol) of CH₃I, 0.32 g (1.2 mmol) of 1,2-dimethyl-3-propyl imidazolium iodide, 50 mg (0.2 mmol) of I₂ were added to the resulting mixture aerated with flow of dry nitrogen .The resulting mixture was kept stirred at 70°C for 20 hours in a nitrogen atmosphere; quaternisation/gelification was confirmed by FT-IR: N-CH₃ (quaternised pyridine nitrogen) 1642 cm⁻¹.

Viscosity: 60 cP at 25°C (shear rate, sec⁻¹, 10)
EIS: *Rs* = 665 Ω; *Rct* = 640 Ω; σ = 2.3 mS/cm.

### Example 5

### Synthesis of 4-vinyl pyridine-n-butyl methacrylate copolymer (Copolymer according to formula (II) with x=1, y=0 and z=12)

Using the same procedure as described in Example 1, 7.46 ml (6.66 g, 46.9 mmol) of n-butyl methacrylate and 0.54 ml (0.53 g, 5.05 mmol) of 4-vinyl pyridine were caused to react in 15 ml of toluene in the presence of 34 mg (0.21 mmol) of AIBN (azobisisobutyronitrile). The solution was heated under stirring at 65°C-70°C for 48 hours. After returning the reaction mixture to ambient temperature, the copolymer was precipitated out by gently pouring the solution into 150-200 ml of methanol, which was kept stirred. The suspension containing the precipitate was filtered, the precipitate was further washed with methanol and dried under vacuum at 40°C/21 mbar. 5.75 g of copolymer were obtained.

Element analysis:
Experimental C = 68.16%
   H = 9.55%
   N = 0.75%
Calculated for x=1, y=0 and z=12
   C = 68.32%
   H = 9.67%
   N = 0.77%

¹H NMR δ_{H} (400 MHz, CDCl₃) 8.42 (**Ar, V**), 6.96 (**Ar, V**), 3.93 **((CH₂O)-_{BBB}),** 1.99 (-(**CH**)-_{V}), 1.89 **(-(CH₂)-_{B}),** 1.79 **(-(CH₂)-_{B}),** 1.64 **(-(CH₂)-_{V}),** 1.59 **(²CH₂-),** 1.38 **(³CH₂-),** 1.01 (α-**(CH₃)_{B}),** 0.94 **(⁴CH₃),** 0.86 (α-**(CH₃)_{B}).**
GPC: Mn = 27.300 Da; M_{w} = 32.800 Da

### Example 6

### Quaternisation of the copolymer in Example 5 and gelification.

***(R₂ = CH₃ Y⁻** = **I⁻)***

Using the same procedure as described in Example 2, 0.4 g of the copolymer in Example 5 were dissolved in 1.25 g of a mixture comprising 3-methoxypropionitrile/ *N*-methyloxazolidinone = 1/1 (w/w). 31 mg (0.22 mmol) of CH₃I , 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was then held at 70°C for 20 hours with stirring in a nitrogen atmosphere; quaternisation/gelification was confirmed by FT-IR: N-CH₃ (quaternised pyridine in nitrogen) 1642 cm⁻¹.

Viscosity: 6362 cP at 25°C (shear rate, sec⁻¹, 10)
EIS: *Rs* = 142 Ω; *Rct* = 103 Ω; σ = 11.7 mS/cm.

### Example 7

### Synthesis of vinyl imidarzole-methyl methacrylate copolymer (Copolymer according to formula (II) with y=1, x=0 and z=11)

Using the same procedure as described in Example 1, 6.70 ml (6.32 g, 63.1 mmol) of methyl methacrylate and 0.71 ml (0.74 g, 7.84 mmol) of vinyl imidazole were caused to react in 15 ml of toluene, in the presence of 64 mg (0.39 mmol) of AIBN (azobisisobutyronitrile). The solution was heated under stirring to 65°C-70°C for 48 hours. After returning the reaction mixture to ambient temperature, the copolymer was precipitated out by slowly pouring the solution into 150-200 ml of methanol, which was kept stirring. The suspension containing the precipitate was filtered, the precipitate was further washed with methanol and dried under vacuum at 40°C/21 mbar, yielding 6.7 g of copolymer.

Element analysis:
Experimental C = 60.19%
   H = 7.82%
   N = 2.33%
Calculated for y=1, x=0 and z=11
   C = 60.30%
   H = 7.87%
   N = 2.34%

¹H NMR δ_{H} (400 MHz, CDCl₃) 7.25 (**Ar, VI**), 6.98 **(Ar, VI**), 6.73 (**Ar, VI**), 3.58 **((CH₃O)-_{MMM}),** 2.02 **(-(CH)-_{VI}),** 1.94 **(-(CH₂)-_{M}),** 1.79 **(-(CH₂)-_{M}),** 1.24 (-**(CH₂)-_{VI}),** 1.00 **((CH₃)-_{M}),** 0.82 **((CH₃**)**-_{M})**.
GPC: Mn = 17.300 Da; M_{w} = 21.400 Da

### Example 8

### Quaternisation of the copolymer in Example 7 and gelification. (R₂ = CH₃ Y⁻ = I⁻)

Using the same procedure as described in Example 2, 0.4 g of the copolymer in Example 7 were dissolved in 1.25 g of a mixture comprising 3-methoxypropionitrile/ *N*-methyloxazolidinone = 1/1 (w/w). 47 mg (0.33 mmol) of CH₃I , 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was kept stirred at 70°C for 20 hours in a nitrogen atmosphere; quaternisation/gelification was confirmed by FT-IR: N-CH₃ (quaternised imidazole nitrogen) 1550 cm⁻¹.

Viscosity: 565 cP at 60°C (shear rate, sec⁻¹, 68)
EIS: *Rs* = 394 Ω; *Rct* = 576 Ω; σ = 4.5 mS/cm.

### Example 9

### Synthesis of vinyl imidazole-n-butyl methacrylate copolymer (Copolymer according to formula (II) with y=1, x=0 and z=6)

Using the same procedure as described in Example 1, 6.22 ml (5.56 g, 39.1 mmol) of n-butyl methacrylate and 0.44 ml (0.46 g, 4.89 mmol) of vinyl imidazole in 15 ml of toluene were caused to react in the presence of 40 mg (0.24 mmol) of AIBN (azobisisobutyronitrile). The solution was heated to 65°C-70°C with stirring for 48 hours. After returning the reaction mixture to ambient temperature, the copolymer was precipitated by slowly pouring the solution into 150-200 ml of methanol, which was kept stirred. The suspension containing the precipitate was filtered, the precipitate was further washed with methanol and dried under vacuum at 40°C/21 mbar, yielding 4.8 g of copolymer.

Element analysis:
Experimental C = 67.11%
   H = 9.48%
   N = 2.94%
Calculated for y= 1, x=0 and z=6
   C = 67.23%
   H = 9.51%
   N = 2.96%

¹H NMR δ_{H} (400 MHz, CDCl₃) 7.24 **(Ar, VI**), 6.95 (**Ar, VI**), 6.72 **(Ar, VI**), 3.93 **((CH₂O)-_{BBB}),** 1.98 **(-(CH)-_{VI}),** 1.89 **(-(CH₂)-_{B}),** 1.79 **(-(CH₂)-_{B}),** 1.59 **(²CH₂-),** 1.38 **(³CH₂-),** 1.25 **(-(CH₂)-_{VI}),** 1.01 (α-**(CH₃)_{B}**), 0.94 **(⁴CH₃),** 0.85 (α-(**CH₃)_{B}**).
GPC: Mn = 30.600 Da; M_{w} = 35.400 Da

### Example 10

### Quaternisation of the copolymer in Example 9 and gelification. (R₂ = CH₃ Y⁻ = I⁻)

Using the same procedure as described in Example 2, 0.4 g of the copolymer in Example 9 were dissolved in 1.25 g of a mixture comprising 3-methoxypropionitrile/*N*-methyloxazolidinone = 1/1 (w/w). 62 mg (0.44 mmol) of CH₃I , 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was held at 70°C for 20 hours with stirring in a nitrogen atmosphere; quaternisation/gelification was confirmed by FT-IR: N-CH₃ (quaternised imidazole nitrogen) 1550 cm⁻¹.
Viscosity: 6108 cP at 25°C (shear rate, sec⁻¹, 10)
EIS: *Rs* = 300 Ω; *Rct* = 260 Ω; σ = 5.8 mS/cm.

### Example 11

### Synthesis of vinyl imidazole-2,2,2-trifluoroethyl methacrylate copolymer

### (Copolymer according to formula (II) with y=1, x=0 and z=10)

Using the same procedure as described in Example 1, 2.93 ml (3.46 g, 20.6 mmol) of 2,2,2-trifluoroethyl methacrylate and 0.23 ml (0.24 g, 2.58 mmol) of vinyl imidazole in 6 ml of toluene were caused to react in the presence of 21 mg (0.13 mmol) of azoisobutyronitrile.

The solution was heated to 65°C-70°C under stirring for 48 hours in a nitrogen atmosphere. After returning the reaction mixture to ambient temperature, the copolymer was isolated after evaporation under vacuum at 40°C/21 mbar, yielding 3.4 g of copolymer.

Element analysis:
Experimental C = 43.79%
   H = 4.25%
   N = 1.57%
Calculated for y=1, x=0 and z=10
   C = 43.97%
   H = 4.28%
   N = 1.58%

¹H NMR δ_{H} (400 MHz, CDCl₃) 7.24 **(Ar, VI**), 7.01 **(Ar, VI**), 6.76 (**Ar, VI**), 4.35 **((CH₂O)-_{TTT}),** 2.04 **(-(CH)-_{VI}),** 1.93 **(-(CH₂)-_{T}),** 1.69 **(-(CH₂)-_{T}),** 1.51 (-**(CH₂)-_{VI}),** 1.08 **((CH₃)-_{T}),** 0.92 **((CH₃)-_{T}).**
GPC: Mₙ = 34.800 Da; M_{w} =38.200 Da

### Example 12

### Quaternisation of the copolymers in Example 11 and gelification. (R₂ = CH₃ Y⁻ = I⁻)

Using the same procedure described as in Example 2, 0.4 g of the copolymer in Example 11 were dissolved in 1.25 g of a mixture comprising 3-methoxypropionitrile/*N*-methyl oxazolidinone = 1/1 (w/w). 34 mg (0.24 mmol) of CH₃I , 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was held at 70°C under stirring for 20 hours in a nitrogen atmosphere; quaternisation/gelification was confirmed by FT-IR: N-CH₃ (quaternised imidazole nitrogen) 1550 cm⁻¹.
Viscosity: 102,5 cP at 40°C (shear rate, sec⁻¹, 68)
EIS: *Rs* = 255 Ω; *Rct =* 261 Ω; σ = 6.5 mS/cm.

### Example 13

### Quaternisation of the copolymers in Example 11 and gelification. (R₂ = CH₃CH₂CH₂ Y⁻ = I⁻)

Using the same procedure described as in Example 2, 0.4 g of the copolymer in Example 11 were dissolved in 1.25 g of a mixture comprising 3-methoxypropionitrile/*N*-methyl oxazolidinone = 1/1 (w/w). 40 mg (0.24 mmol) of CH₃CH₂CH₂I, 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was held at 70°C under stirring for 20 hours in a nitrogen atmosphere; quaternisation/gelification was confirmed by FT-IR: N-CH₂- (quaternised imidazole nitrogen) 1550 cm⁻¹.
Viscosity: 100 cP at 25°C (shear rate, sec⁻¹, 68)
EIS: *Rs* = 255 Ω; *Rct* = 295 Ω; σ = 6.4 mS/cm.

### Example 14

### Synthesis of 4-vinyl pyridine-vinyl imidazole-methyl methacrylate terpolymer (terpolymer according to formula (II) with x=1, y=2 and z=6)

Using the same procedure as described in Example 1, 3.20 ml (3.0 g, 29.96 mmol) of methyl methacrylate, 1.98 ml (2.05 g, 21.79 mmol) of vinyl imidazole and 0.29 ml (0.29 g, 2.72 mmol) of 4-vinyl pyridine in 12 ml of toluene were caused to react in the presence of 49 mg (0.30 mmol) of AIBN (azobisisobutyronitrile). The solution was heated to 65°C-70°C under stirring for 48 hours. After returning the reaction mixture to ambient temperature, the copolymer was isolated by evaporation of the solvent under vacuum at 40°C/21 mbar yielding 5.29 g of copolymer.

Element analysis:
Experimental C = 63. 03%
   H = 7.46%
   N = 7.82%
Calculated for x= 1, y=2 and z=6
   C = 63.16%
   H = 7.50%
   N = 7.84%

¹H NMR δ_{H} (400 MHz, CDCl₃) 8.44 **(Ar, V**), 7.28 **(Ar, VI)**, 7.02 (**Ar, VI**), 6.97 (**Ar, VI**), 6.72 (**Ar, V**), 3.58 **((CH₂O)-_{MMM}),** 3.25 **((CH₂O)-_{MMV}),** 2.95 **((CH₂O)-_{MMV}),** 2.14 **(-(CH)-_{V}, -(CH)-_{VI}),** 1.84 **(-(CH₂)-_{M}),** 1.73 **(-(CH₂)-_{V}),** 1.40 **(-(CH₂)-_{VI}),** 1.0 **(-(CH₃)_{M}),** 0.96 (-(**CH₃**)_{M}), 0.81 (-(**CH₃**)**_{M}**).
GPC: Mn = 23.400 Da; M_{w} =28.400 Da

### Example 15

### Quaternisation of the copolymers in Example 14 and gelification. (R₂ = CH₃ Y⁻ = I⁻)

Using the same procedure as described in Example 2, 0.4 g of the copolymer in Example 14 were dissolved in 1.25 g of a mixture comprising 3-methoxypropionitrile/*N*-methyl oxazolidinone = 1/1 (w/w). 47 mg (0.33 mmol) of CH₃I , 0.32 g (1.2 mmol) of 1,2-dimethyl-3-propyl imidazolium iodide, 50 mg (0.2 mmol) of I₂ were added to the resulting mixture aerated with flow of dry nitrogen. The resulting mixture was held at 70°C for 20 hours under stirring in a nitrogen atmosphere; quaternisation/gelification was confirmed by FT-IR: N-CH₃ (quaternised pyridine nitrogen) 1642 cm⁻¹, N-CH₃ (quaternarised imidazole nitrogen) 1550 cm⁻¹.
Viscosity: 10450 cP at 60°C (shear rate, sec⁻¹, 10)
EIS: *Rs* = 220 Ω; *Rct* = 100 Ω; σ = 7.5 mS/cm.

### Example 16

A DSSC *(dye sensitized solar cell)* was assembled as described below: the working electrode (or photoelectrode) is a 2 cm x 2 cm glass electrode (Solaronix TCO22-15, thickness 2.2 mm, 15 ohm/cm²) coated by a conductive substrate based on FTO (fluoride-doped tin oxide).

The photoelectrode (anode) comprised a 12 µm thick film of Solaronix paste based on TiO₂; the paste was deposited on the surface of the photoelectrode by screen printing (active area 0.9 cm x 0.3 cm) and the photoelectrode was gradually heated up to 520°C, sintered for 30 minutes at 520°C, and gradually returned to ambient temperature.

After the sintering process, the photoelectrode was immersed in a 0.3 mM solution of *N*719 dye (*cis*-di(thiocyanate)-*N,N*'-bis(2,2'-bipyridyl-4-carboxy-4'-tetrabutyl ammonium carboxylate)Ru(II) in acetonitrile/*tert*-butyl alcohol (v:v = 1:1) and maintained at ambient temperature for 24 hours in order to complete adsorption of the dye onto the titanium dioxide surface.

The counterelectrode was prepared as described as follows: a hole was made in the electrode and platinum was deposited on the surface of the latter using an electron beam evaporator (Pt thickness 200 nm).

The TiO₂ photoelectrode and the Pt counterelectrode were then assembled to form a device which used Surlyn 1702(Du-Pont) as sealant and spacer (thickness 50 µm).

The electrolyte gel obtained as described in Example 8, previously heated to 50-60°C, was placed in correspondence of the hole made in the cell counterelectrode, heating the cell to 50-60°C. The electrolyte was then inserted into the device by filling under vacuum: the cell was placed in the small chamber in which vacuum was successively applied in order to remove the air within it. Finally the hole was sealed with Surlyn.

Following photo-irradiation the following parameters which are characteristic of the current-voltage response of a solar cell were recorded at time 0 and after 2160 hours.

| | ***η (%)*** | ***FF*** | ***Voc (V)*** | ***Jsc (mA*/*cm²)*** |
|---|---|---|---|---|
| **t = 0** | **4.6004** | **0.5956** | **0.7504** | **10.2933** |
| **t = 2160 h** | **4.3868** | **0.6431** | **0.7116** | **9.5851** |

### Example 17

Using the same procedure as described in Example 16, but using the electrolyte gel obtained as described in Example 13, the following parameters characteristic of the current-voltage response of a solar cell following photo-irradiation were recorded at time O and after 2160 hours.

| | ***η (%)*** | ***FF*** | ***Voc (V)*** | ***Jsc (mA*/*cm²)*** |
|---|---|---|---|---|
| **t = 0** | **4.3516** | **0.6559** | **0.7408** | **8.9558** |
| **t = 2160 h** | **4.1869** | **0.649** | **0.731** | **8.8252** |

### Example 18 (reference)

The same procedure as described in Example 16 was performed, but using a liquid electrolyte characterised by the following composition: acetonitrile, LiI 0.1 M, I₂ 0.05 M, 1,2-dimethyl-3-propyl imidazolium iodide 0.6 M, 4-t-butyl pyridine 0.5 M. No heating of either the device or the material itself was required when introducing the electrolyte into the cell. Following photo-irradiation the following parameters characteristic of the current - voltage response of the solar cell were recorded at time zero and after 336 hours.

| | ***η (%)*** | ***FF*** | ***Voc (V)*** | ***Jsc (mA*/*cm²)*** |
|---|---|---|---|---|
| **t = 0** | **5.6292** | **0.7389** | **0.669** | **11.3877** |
| **t = 336 h** | **2.707** | **0.6783** | **0.5788** | **6.8951** |

## Claims

1. Copolymer of formula (I) 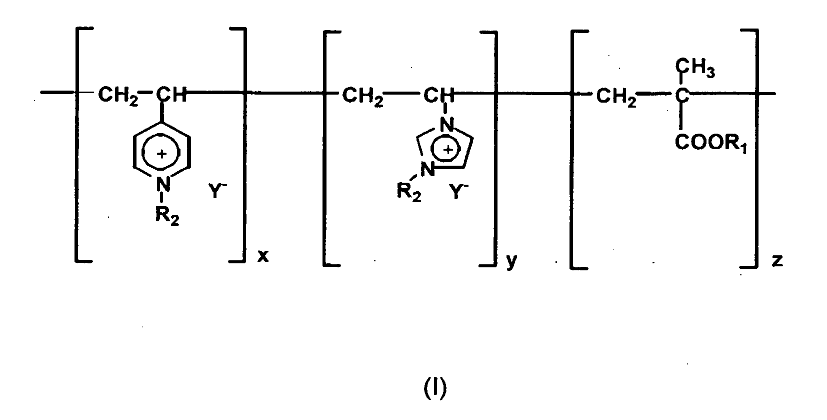 in which:
**R₁** is selected from a straight or branched C₁-C₈ alkyl, optionally substituted by one or more fluorine atoms,
**R₂** is selected from a straight or branched C₁-C₈ alkyl, optionally substituted by one or more fluorine atoms,
**Y⁻** is an inorganic or organic anion,
**x, y, z** each represent the molar ratios of the corresponding monomer units present in the copolymer, where (x+y) lies between > 0% and ≤ 90% with respect to the sum of (x+y+z) and where none of x,y,z is = 0%,
said copolymer having molecular weight (Mₙ) comprised between 15000 and 40000 Da.

2. Copolymer according to claim 1, in which:
R₁ is selected from a straight or branched C₁-C₄ alkyl, a -CH₂CF₃ group, a -CH₂CF₂CF₃ group or a -CH₂CH₂CF₃ group,
R₂ is selected from a straight or branched C₁-C₄ alkyl, optionally substituted by one or more fluorine atoms,
Y⁻ is selected from Cl⁻, Br⁻, I⁻, CF₃COO⁻, CF₃SO₃⁻ or (CF₃SO₂)₂N⁻.

3. Copolymer according to claims 1-2, in which:
R₁ is selected from methyl, butyl or trifluoroethyl,
R₂ is selected from methyl, n-propyl or trifluoropropyl,
Y⁻ is selected from I⁻, CF₃COO⁻ or (CF₃SO₂)₂N⁻.

4. Electrolyte gel comprising one or more copolymers of formula (I) 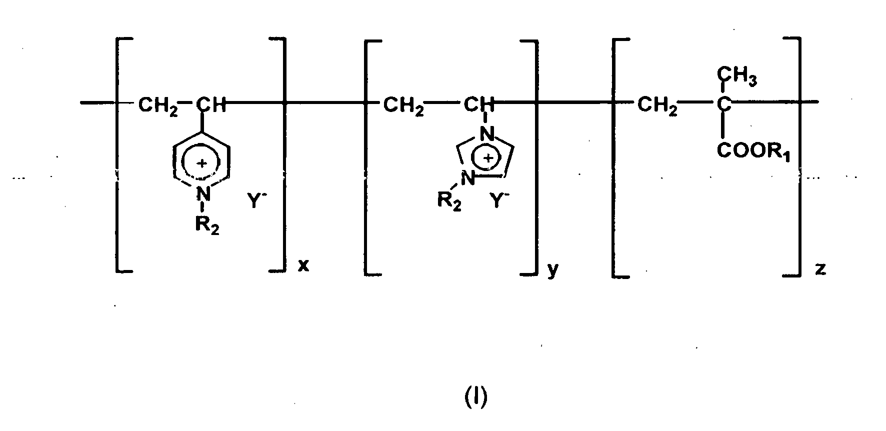 in which:
**R₁** is selected from a straight or branched C₁-C₈ alkyl, optionally substituted by one or more fluorine atoms,
**R₂** is selected from a straight or branched C₁-C₈ alkyl, optionally substituted by one or more fluorine atoms,
**Y⁻** is an inorganic or organic anion,
**x, y, z** each represent the molar ratios of the corresponding monomer units present in the copolymer, where (x+y) lies between > 0% and ≤ 90% with respect to the sum of (x+y+z),
said copolymer having molecular weight (Mₙ) comprised between 15000 and 40000 Da and being at a concentration of between 15% and 40% by weight in a solvent, optionally in presence of standard electrolytes.

5. Process for preparation of an electrolyte gel, comprising adding the copolymer of formula (I) of claim 4 to a suitable solvent, in a concentration range from 15% to 40% by weight, optionally in presence of standard electrolytes.

6. Process for the preparation of the copolymers described in claims 1-3, comprising reacting a copolymer of formula (II) in which R₁, x, y and z have the meanings described in claim 1 optionally in presence of standard electrolytes, 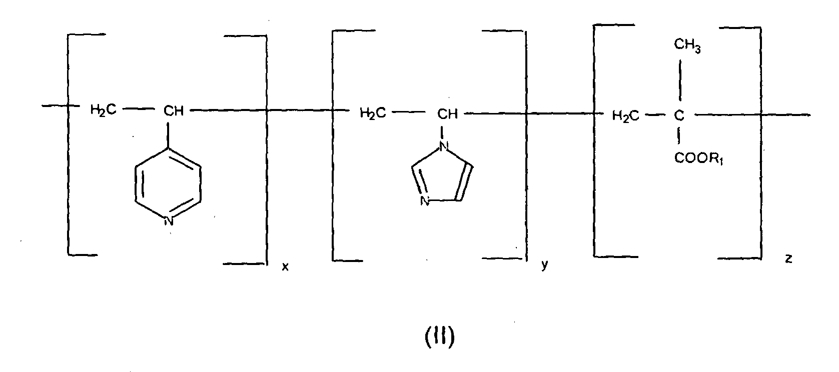 with a monoalkylating halide of formula R₂-Hal, where R₂ has the meaning described in claim 1, and Hal indicates a leaving group selected from atoms of chlorine, bromine and iodine, preferably iodine.

7. Process according to claims 5 or 6, in which the standard electrolytes comprise one or more of: iodine, alkali metal and alkaline earth metal iodides, iodides of quaternary ammonium compounds and of N-heterocyclic cations such as, for example, 1,2-dimethyl-3-propyl-imidazolium iodide.

8. Process according to claim 7, in which the iodides are selected from LiI, Nal, KI, CsI, CaI₂, and 1,2-dimethyl-3-propyl-imidazolium iodide.

9. Process according to claims 7-8, in which the said iodides are present at a concentration of between 0.05 M and 1 M, and the iodine is at a concentration of between 0.01 M and 0.3 M.

10. Use of a gel according to claim 4, as a charge transfer medium.

11. Use according to claim 10, in which the gel is incorporated into a photoelectrochemical device.

12. Photoelectrochemical device containing the electrolyte gel according to claim 4.

13. Device according to claim 12, comprising one or more photovoltaic cells.

14. Device according to claim 13, in which the photovoltaic cell is a dye sensitized solar cell.

15. A process to prepare a photoelectrochemical device according to claims 12-14 comprising injecting, through a hole of said device, the gel according to claim 4 in heated state.

## Patentansprüche

1. Copolymer mit der Formel (I) 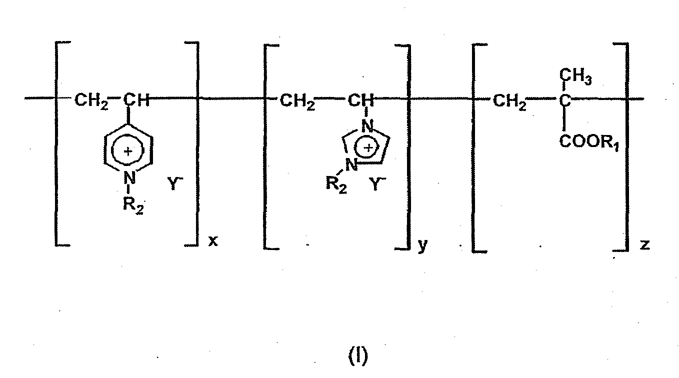 wobei:
**R₁** ausgewählt ist aus einer geradlinigen oder verzweigten C₁-C₈Alkylgruppe, welche optional durch eines oder mehrere Fluratome substituiert ist,
**R₂** ausgewählt ist aus einer geradlinigen oder verzweigten C₁-C₈Alkylgruppe, welche optional durch eines oder mehrere Fluratome substituiert ist,
**Y⁻** ein anorganisches oder organisches Anion ist,
**x, y, z** jeweils ein Molverhältnis der korrespondierenden monomeren Einheit enthalten in dem Copolymer darstellt, wobei (x+y) zwischen > 0% und ≤ 90% im Hinblick auf die Summe (x+y+z) liegt und wobei keines der x, y, z = 0% ist,
wobei das Copolymer ein Molekulargewicht (Mₙ) zwischen 15000 und 40000 Da umfasst.

2. Copolymer nach Anspruch 1, wobei
R₁ ausgewählt ist aus einer geradlinigen oder verzweigten C₁-C₄Alkylgruppe, einer -CH₂CF₃ Gruppe, einer -CH₂CF₂CF₃ Gruppe oder einer -CH₂CH₂CF₃ Gruppe,
R₂ ausgewählt ist aus einer geradlinigen oder verzweigten C₁-C₄Alkylgruppe, welche optional durch eines oder mehrere Fluratome substituiert ist,
Y⁻ ausgewählt ist aus Cl⁻, Br⁻, I⁻, CF₃COO⁻, CF₃SO₃⁻, oder (CF₃SO₂)₂N⁻.

3. Copolymer nach den Ansprüchen 1-2, wobei
R₁ ausgewählt ist aus Methyl, Butyl, Trifluorethyl,
R₂ ausgewählt ist aus Methyl, n-Propyl oder Trifluorpropyl,
Y⁻ ausgewählt ist aus I⁻, CF₃COO⁻ oder (CF₃SO₂)₂N⁻.

4. Elektrolytgel umfassend eines oder mehrere Copolymere mit der Formel (I) 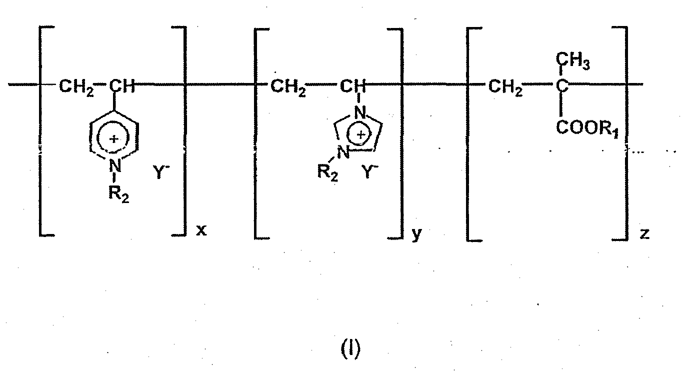 wobei:
**R₁** ausgewählt ist aus einer geradlinigen oder verzweigten C₁-C₈Alkylgruppe, welche optional durch eines oder mehrere Fluratome substituiert ist,
**R₂** ausgewählt ist aus einer geradlinigen oder verzweigten C₁-C₈Alkylgruppe, welche optional durch eines oder mehrere Fluratome substituiert ist,
**Y⁻** ein anorganisches oder organisches Anion ist,
**x,** y, **z** jeweils ein Molverhältnis der korrespondierenden monomeren Einheit enthalten in dem Copolymer darstellt, wobei (x+y) zwischen > 0% und ≤ 90% im Hinblick auf die Summe (x+y+z) liegt,
wobei das Copolymer ein Molekulargewicht (Mₙ) zwischen 15000 und 40000 Da umfasst und in einer Konzentration von zwischen 15% und 40 Gewichts-% in einem Lösungsmittel vorliegt, gegebenenfalls in Anwesenheit von Standardelektrolyten.

5. Verfahren zur Herstellung eines Elektrolytgels, umfassend die Zugabe des Copolymers mit der Formel (I) gemäß Anspruch 4 zu einem geeigneten Lösungsmittel, in einem Konzentrationsbereich von 15% bis 40 Gewichts-%, gegebenenfalls in Anwesenheit von Standardelektrolyten.

6. Verfahren zur Herstellung der in den Ansprüchen 1-3 beschriebenen Copolymere, umfassend das Umsetzen eines Copolymers der Formel (II), in der R₁, x, y und z die in Anspruch 1 gegebenenfalls in Anwesenheit von Standardelektrolyten beschriebenen Bedeutungen haben, 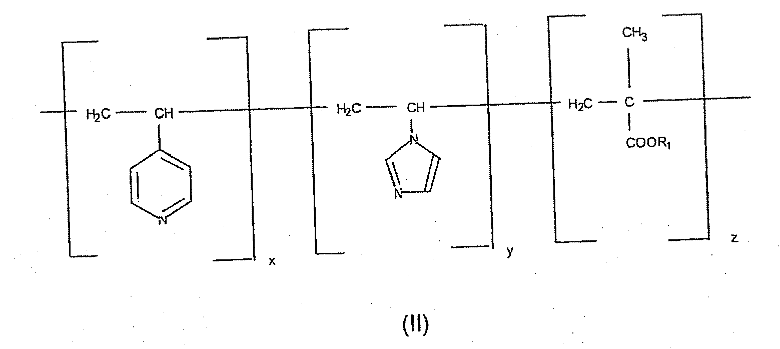 mit einem monoakylierendem Halogenid mit der Formel R₂-Hal, wobei R₂ die in Anspruch 1 beschriebene Bedeutung hat und Hal eine Abgangsgruppe ausgewählt aus den Atomen von Chlor, Brom und Jod, vorzugsweise Jod, bezeichnet.

7. Verfahren nach den Ansprüchen 5 oder 6, wobei die Standardelektrolyte eines oder mehrere von: Jod, Alkalimetall- und Erdalkalimetalliodiden, Iodiden von quaternären Ammoniumverbindungen und von N-heterocyclischen Kationen, wie beispielsweise 1, 2-Dimethyl-3-Propyl-Imidazolium Iodid umfassen.

8. Verfahren nach Anspruch 7, wobei die Iodide aus LiI, Nal, KI, Csl, CaI₂ und 1, 2-Dimethyl-3-Propyl-Imidazolium Iodid ausgewählt sind.

9. Verfahren nach den Ansprüchen 7-8, bei dem die Iodide in einer Konzentration zwischen 0,05 M und 1 M und das Jod in einer Konzentration zwischen 0,01 M und 0,3 M vorhanden sind.

10. Verwendung eines Gels gemäß Anspruch 4 als ein Ladungstransfermedium.

11. Verwendung nach Anspruch 10, wobei das Gel in eine photoelektrochemische Vorrichtung integriert ist.

12. Photoelektrochemische Vorrichtung, die das Elektrolytgel gemäß Anspruch 4 enthält..

13. Vorrichtung nach Anspruch 12 umfassend eine oder mehrere Photovoltaikzellen.

14. Vorrichtung nach Anspruch 13, wobei die Photovoltaikzelle eine Farbstoffsolarzelle ist.

15. Verfahren zur Herstellung einer photoelektrochemischen Vorrichtung nach den Ansprüchen 12- 14 umfassend das Injizieren des Gels gemäß Anspruch 4 in erwärmtem Zustand durch ein Loch der Vorrichtung.

## Revendications

1. Copolymère de la formule (I) 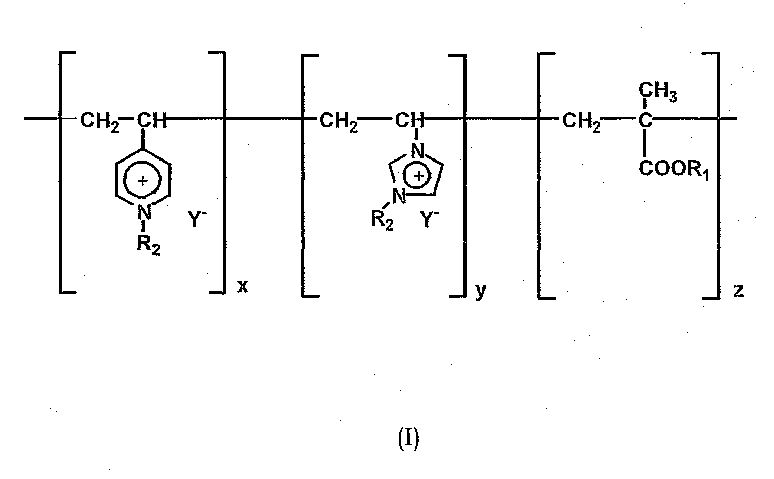 dans laquelle
**R1** est choisi à partir d'un alkyl C1-C8 linéaire ou ramifié, éventuellement substitué par un ou plusieurs atomes de fluor
**R2** est choisi à partir d'un alkyl C1-C8 linéaire ou ramifié, éventuellement substitué par un ou plusieurs atomes de fluor
**Y-** est un anion organique ou inorganique
**x**, **y, z** représentent chacun les rapports molaires des motifs monomères correspondants présents dans le copolymère où (x+y) sont présents entre 0% et 90% par rapport à la somme d (x+y+z) aucun des x, y, z n'est égal à 0%
ledit copolymère ayant un poids moléculaire (Mn) compris entre 15000 et 40000 Da.

2. Copolymère selon la revendication 1 dans lequel
**R1** est choisi à partir d'un alkyl C₁-C₄ linéaire ou ramifié, un groupe-CH2CF3, un groupe -CH2CF2CF3 ou un groupe -CH2CH2CF3
**R2** est choisi à partir d'un alkyl C₁-C₄ linéaire ou ramifié, éventuellement substitué par un ou plusieurs atomes de fluor
**Y-** est choisi à partir de Cl-, Br-, I-, CF3COO-, CF3SO3- ou (CF₃SO₂)₂N⁻.

3. Copolymère selon les revendications 1-2 dans lequel
**R1** est choisi parmi les méthyle, butyle ou trifluoroéthyle
**R2** est choisi parmi les méthyle, n-propyle ou trifluoropropyle
**Y-** est choisi à partir deI-, CF3COO- ou (CF₃SO₂)₂N⁻.

4. Electrolyte en forme de gel comprenant un ou plusieurs copolymères de formule (I) 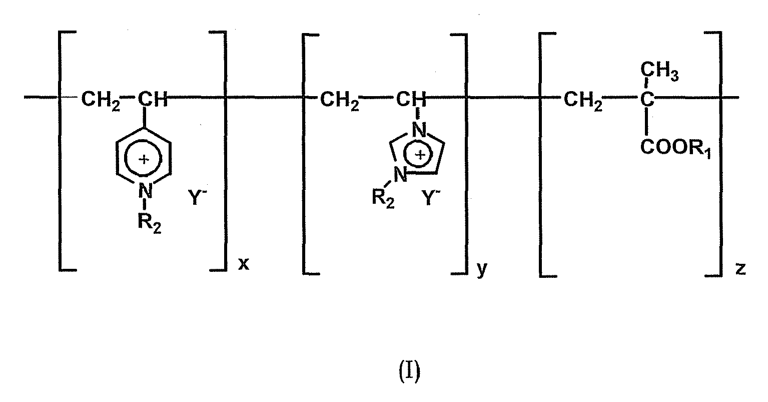 dans laquelle
**R1** est choisi à partir d'un alkyl C1-C8 linéaire ou ramifié éventuellement substitué par un ou plusieurs atomes de fluor
**R2** est choisi à partir d'un alkyl C1-C8 linéaire ou ramifié, éventuellement substitué par un ou plusieurs atomes de fluor
**Y-** est un anion inorganique ou organique
**x, y, z** représentent chacun les rapports molaires des motifs monomères correspondants présents dans le copolymère, où (x+y) sont présents entre 0% et 90% par rapport à la somme de (x+y+z)
ledit copolymère ayant un poids moléculaire (Mn) compris entre 15000 et 40000 Da et étant à une concentration comprise entre 15% et 40% en poids dans un solvant, éventuellement en présence d'électrolytes usuels.

5. Procédé de préparation d'un électrolyte en forme de gel, comprenant l'addition du copolymère de formule (I) de la revendication 4 à un solvant approprié en une concentration allant de 15% à 40% en poids, éventuellement en présence d'électrolytes usuels.

6. Procédé de préparation des copolymères selon les revendications 1-3 comprenant faire réagir un copolymère selon la formule (II) dans lequel R1, x, y et z ont le caractéristiques selon la revendication 1 éventuellement en présence des électrolytes usuels, 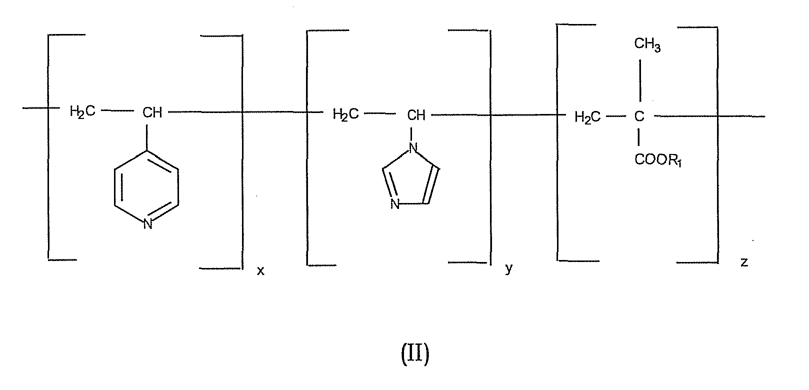 avec un halogénure de monoalkylation de formule R2-Hal, dans laquelle R2 correspond à la revendication 1 et Hal désigne un groupe choisi à partir d'atomes de chlore, brome et iode de préférence iode.

7. Procédé selon les revendications 5 ou 6 dans lequel les électrolytes usuels comprennent un ou plus composés de iodure, métal alcalin et iodures métallique alcalino-terreux, iodures d'ammonium quaternaire et de cations N-hétérocycliques tels que par exemple du iodure de 1,2-diméthyle-3-propyl-imidazolium.

8. Procédé selon la revendication 7 dans lequel les iodures sont choisis parmi Lil, Nal, Kl, Csl, Cal2, et iodure de 1,2-diméthyle-3-propyl-imidazolium.

9. Procédé selon les revendications 7-8 dans lequel lesdits iodures sont présents à une concentration entre 0,05 M et 1M et que l'iode est à une concentration entre 0,01M et 0,3M.

10. Utilisation d'un gel selon la revendication 4 à titre de moyen de transfert de charge.

11. Utilisation selon la revendication 10 dans lequel le gel est incorporé dans un dispositif photoélectrochimique.

12. Dispositif photoélectrochimique contenant l'électrolyte sous forme de gel selon la revendication 4.

13. Dispositif selon la revendication 12 comportant une ou plusieurs cellules photovoltaïques.

14. Dispositif selon la revendication 13 dans lequel la cellule photovoltaïque est une cellule solaire sensibilisée à la teinte.

15. Procédé pour préparer un dispositif photoélectrochimique selon les revendications 12-14 comprenant l'injection à travers un orifice dudit dispositif du gel selon la revendication 4 à l'état chauffé.
